# EUROPEAN PATENT SPECIFICATION

(11) **EP 0 758 301 B1**
(45) Date of publication and mention of the grant of the patent: **04.11.1998**
(21) Application number: 94919028.4
(22) Date of filing: 04.05.1994
(51) Int. Cl.: B60N 2/50, B61D 33/00

(54) **A SPRING SYSTEM FOR RESILIENT SUSPENSION OF OBJECTS, SUCH AS VEHICLE SEATS**
EIN FEDERSYSTEM ZUR ELASTISCHEN AUFHÄNGUNG VON OBJEKTEN WIE ETWA FAHRZEUGSITZEN
SYSTEME DE RESSORT POUR LA SUSPENSION SOUPLE D'OBJETS, TELS QUE DES SIEGES DE VEHICULE

(43) Date of publication of application: 19.02.1997
(73) Proprietor: Rova, Jan-Erik, 981 44 Kiruna (SE)
(72) Inventor: Rova, Jan-Erik, 981 44 Kiruna (SE)
(74) Representative: Delmar, John-Ake
(86) International application number: SE9400407
(87) International publication number: WO9530558

(56) References cited:
- EP-A- 54 880
- SE-C- 66 594
- US-A- 3 244 393
- US-A- 3 865 340

## Description

The present invention refers to a spring system for resilient suspension of objects subjected to great disturbing forces with low frequencies, such as vehicle seats and particularly driver's seats in railway vehicles, and for accomodation of movements with at least three degrees of freedom between object and base, the object by means of two sets of guide means arranged vertically above each other being mounted freely movable substantially horizontally in two directions at right angles to each other.

A spring system of this type is known from EP-A-0 054 880 as well as from the Swedish patent specification 66594 from the year 1926. In both cases, pairs of tension springs are used for controlling the movement in two directions at right angles to each other. The plurality of spring means makes the structure rather complicated.

Spring systems of the most various kinds have been suggested during the years in order to solve different spring suspension problems, particularly in connection with vehicles. Most often said spring systems have been focused on solving the spring problems in connection with vibratory motions of higher frequencies while the low frequencies close to 1 Hz have been paid little attention to.

A structure according to the preamble of the main claim is known from US-A-3 865 340. This structure is primarily intended for use in a gyroscope mounting and allows relative movement between a first and a second body in three mutually perpendicular directions whilst maintaining said bodies in a stable angular position relative to one another. In this prior structure there is used a damping means including a spring steel hoop which may be distorted linearly in all three axes.

In the last years the health hazards in connection with the practising of various professions have been more observed and the attention has been more and more focused on such low-frequency vibrations which occur in certain types of vehicles and which imply great loads on the human body which might lead to occupational injuries. One such occupational category is for instance locomotive drivers, particularly drivers of heavy freight trains where movements in y-direction (i.e. transversely to the direction of travel) might imply throw movements of a magnitude of up to 60 mm at railway failures. The accommodation of such movements requires spring suspensions with long stroke and in the last years suggestions have been made in order to improve the travel comfort to locomotive drivers without, however, any decisive success having been achieved.

The object of the present invention as defined in independent claim 1 is to suggest a device in spring systems of the afore-mentioned kind which has turned out to be a very good solution to the problems present. The invention is substantially distinguished in that the object is permanently subjected to the force of a tension spring means, which at one of its ends is secured to the centre of the horizontal underside of the object, supported by the upper set of guide means, and at its other end is secured to the centre of the lower set of guide means, supported by the base, if desired at a downwards off-set position.

The present invention now allows the provision of a really comfortable travel to the person sitting in the seat, which has been confirmed by theoretical as well as practical tests.

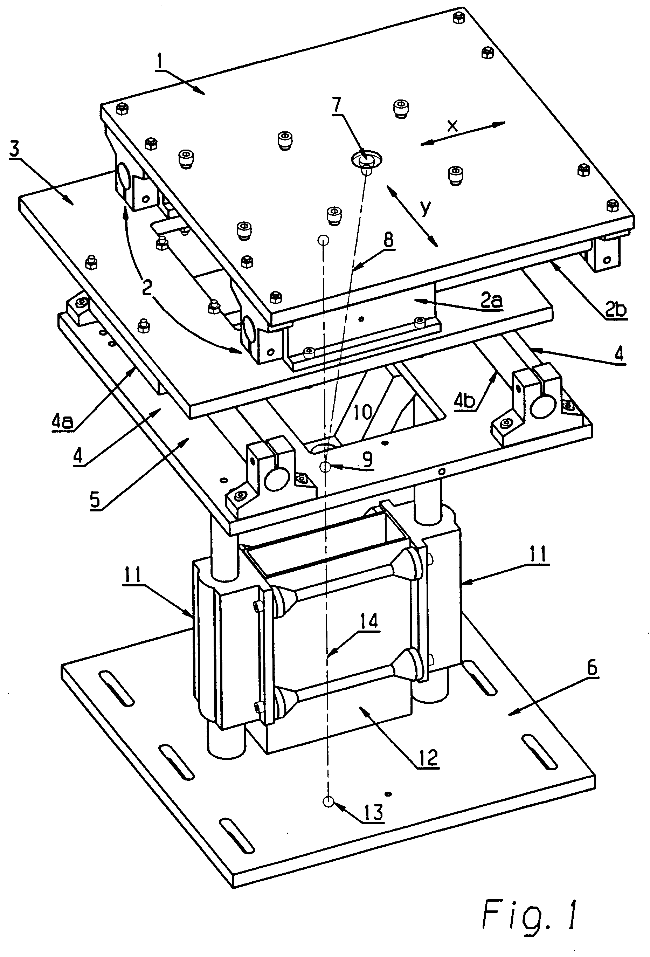

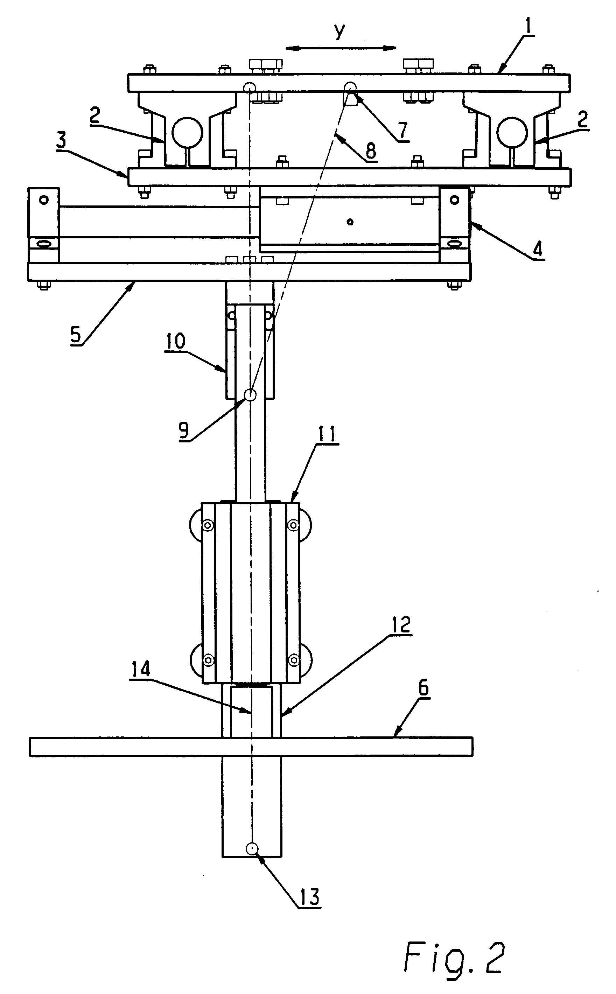

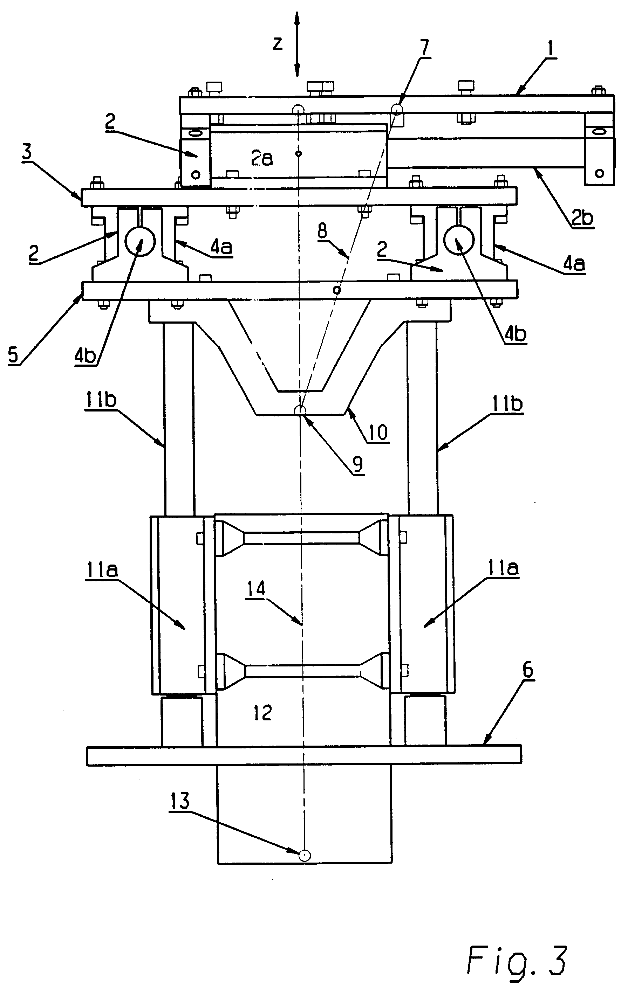

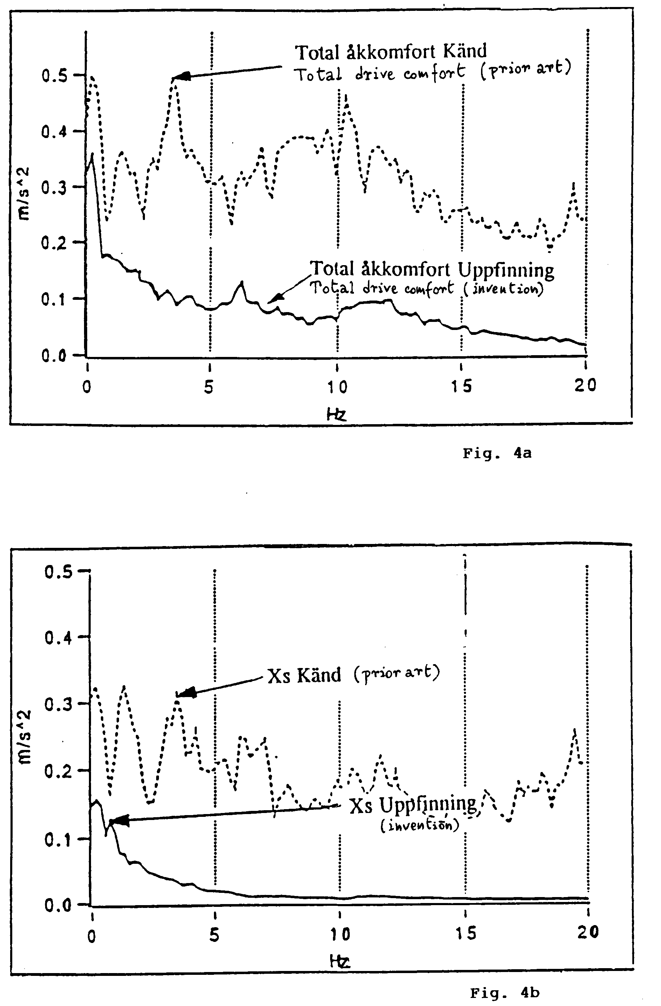

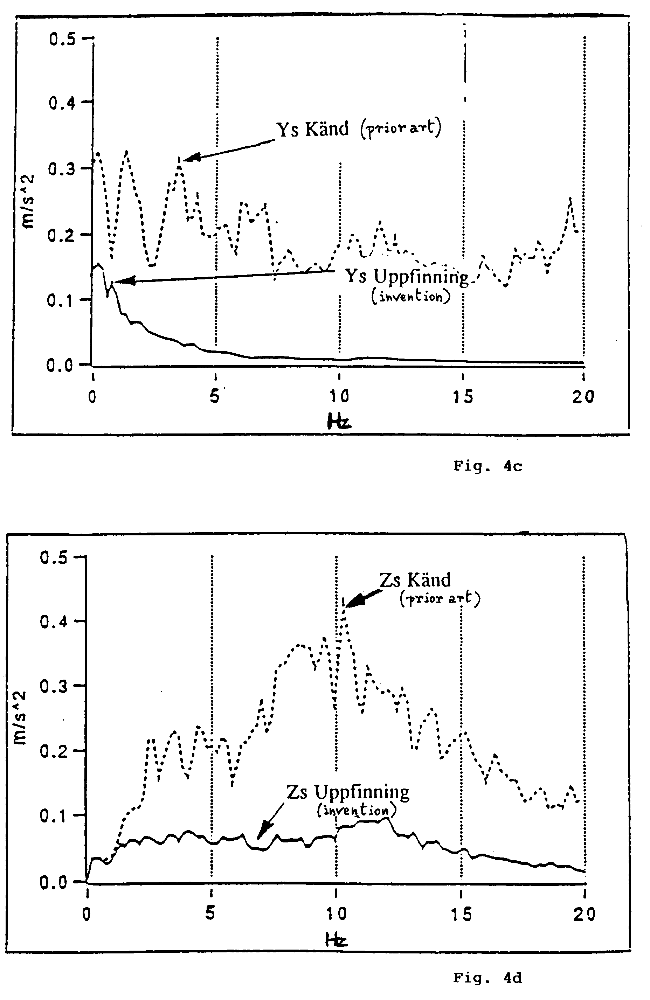

By way of example the invention will be further described below with reference to the accompanying drawing, in which Fig. 1 is a perspective view of the inventive spring system, Fig. 2 is a side elevational view of the same system, Fig. 3 is a further side elevational view of the system at right angles to the view of Fig. 2 and Fig. 4 is a diagram illustrating the advantageous effects of the inventive system with respect to the total comfort improvement and the impact damping action in x, y and z direction.

In Figs. 1-3 of the drawing an inventive spring system is illustrated, which comprises a substantially horizontal mounting plate 1, adapted to support an object subjected to disturbing forces such as a vehicle seat and particularly a driver's seat in a non-illustrated railway vehicle. By means of a first set of guide means 2 the mounting plate is journalled freely movable in a first direction which has been indicated by an arrow x on the drawing. Said guide means might be of any known type but are most advantageously made as so-called linear bearings with ball bushings 2a. A bearing rod 2b runs therein and the number of linear bearings in the set amounts to at least two.

The ball bushings 2a are, in turn, mounted on an underlying and also substantially horizontal intermediary plate 3, which, in turn, by means of a second set of guide means 4 is journalled freely movable in a direction at right angles to the first-mentioned direction, such as indicated by the arrow y on the drawing. Preferably, also said second set of guide means 4, which also are at least two in number, are of the same kind as the first set and hence consist of linear bearings with ball bushings 4a, which are slidably movable on bearing rods 4b. The arrangement is such that the ball bushings 4a preferably are mounted at the lower side of the intermediate plate 3 and run on the parallel bearing rods 4b, which, in turn, are mounted on a substantially horizontal base plate 5. This is supported from a floor 6 or a corresponding base in e.g. a locomotive.

A tension spring means 8, which in the drawing only has been indicated by means of broken lines, extends from a position 7 at the centre of the lower side of the uppermost mounting plate 1 to a position at the centre of the lower set of guide means 4, supported by the base 6, and particularly at a position 9 vertically downwardly off-set in relation to said guide means 4. The tension spring means 8 thus always tends to keep its two mounting ends 7 and 9 located on the same vertical axis. Every disturbing active force in the x direction or y direction which leads to a sliding movement of the mounting plate 1 and/or the intermediate plate 3 in x direction and y direction respectively, or to a combined orbital motion, a so-called yaw motion, in the horizontal plane will cause an extension of the spring means 8 and hence the occurance of a corresponding returning force. It is to be noted that the structural arrangement according to the invention provides such a geometry of the motion of the tension spring 8 that the spring action will be progressive in a very advantageous way.

The tension spring 8 can be of any known type but is preferably a gas hydraulic spring of elongated cylindrical type such as often is used within the vehicle field. Said gas-hydraulic spring may also be provided with a damping action, preferably adjustable, as is well known.

As is evident from Fig. 3 the lower mounting end 9 of the tension spring 8 preferably is secured to a yoke 10 which extends downwardly from the lower side of the base plate 5, namely in order to assure a required spacing between the mounting ends 7 and 9 of the spring in view of the structure length of the tension spring 8, particularly when the same is a gas-hydraulic spring. The mounting end 9 lies on the vertical central axis of the base plate 5.

The above-stated design allows that the mounting plate 1 and hence a driver's seat of e.g. a railway locomotive might be supported with a possibility for movements with three degrees of freedom, thus x, y and yaw. In spite of the relatively restricted space in driver's compartments of locomotives and the like the required long spring travel distances of up to 80 mm might be provided owing to the spring system suggested according to the invention. This provides for the achievement of a substantially improved travel comfort to the person sitting in the driver's seat. This is evident from practical tests which have been carried out and which have been illustrated in Fig. 4 of the drawing. In said figure, Fig. 4a is a diagram of the relation between the number of oscillations in hertz and the accelerations in a prior driver's chair (dotted line) and the inventive subject matter (unbroken line). In Fig. 4b is illustrated the corresponding relation to disturbances in y direction which in this case implies oscillations in the transversal direction of the vehicle, while in Fig. 4c the same relation in x direction has been illustrated, thus in the longitudinal direction of the vehicle.

As also is evident from the drawing, the suggested structural embodiment of the spring system for vehicle seats and the like according to a further feature of the invention provides for a similar springing action also In vertical or z direction. In this case, the base plate 5 is similarly journalled freely slidable in vertical direction by means of a third set of guide means 11. Said guide means consist of at least two parallell vertical bearing rods 11b, which with their upper ends are secured to the base plate and which are journalled in corresponding bearing bushings 11a which are rigidly secured to the floor or base 6 by means of a bed 12. Vertically through said hollow bed 12 extends from a position 13 in the centre of the bottom thereof a pressure spring 14 which only has been indicated by a dotted line. At its upper end said pressure spring 14 is secured at a position in vertical alignment with and preferably also horizontally coinciding with the mounting end 9 of the lower end of the tension spring 8.

Owing to said design a still further improved springing action might be obtained which has been illustrated in Fig. 4d.

Furthermore, the pressure spring 14 might be of any suitable known type but preferably said spring also is made as a gas-hydraulic spring, particularly provided with damping action.

## Claims

1. A spring system for resilient suspension of an object subjected to disturbing forces with low frequencies, such as vehicle seats and particularly driver's seats in railway vehicles, and for accommodation of long-stroke movements with at least three degrees of freedom between said object and a base supporting same, two sets of guide means (2, 4) being arranged vertically above each other and being mounted freely movable substantially horizontally in two directions (x, y) at right angles to each other to allow movement of an object (1), a spring means (8) being centrally mounted for acting between the horizontal underside of the object (1), supported by the upper set of guide means (2), and a base, said spring means (8) being adapted to permanently provide a directional force towards the centred position of the object (1) in which it (1) occupies a substantially vertical position, **characterized in** that said spring means is constituted by a tension spring (8), known per se, which acts between object and base via the lower set of guide means (4) supported by the base, and which under the conditions of motion on the linear guide means (2, 4) provides for a required long-stroke and progressive springing action of the system.

2. A system according to claim 1 and intended to accommodate also movements with a further degree of freedom, namely in vertical direction (z), **characterized in** that the lower set of guide means (4), in turn, is freely movably supported in substantially vertical direction (z) under the permanent action of a pressure spring means (15) by means of a third set of guide means (12), said pressure spring means (15) being attached at one end to the centre (9) of the second set of guide means (4) and with its other end attached to the base (6) vertically below the first end.

## Patentansprüche

1. Federsystem zur elastischen Aufhängung eines Gegenstandes, der Störkräften niedriger Frequenz ausgesezt ist, wie z.B. Fahrzeugsitze und insbesondere Fahrersitze in Eisenbahnfahrzeugen, und zum Aufnehmen langhubiger Bewegungen mit mindetens drei Freiheitsgraden zwischen dem Gegenstand und einem ihn tragenden Unterbau, wobei zwei Sätze von Führungsvorrichtungen (2, 4) vertikal übereinander angeordnet und im wesentlichen horizontal in zwei Richtungen (x, y) im rechten Winkel zueinander derart frei beweglich angeordnet sind, daß sie Bewegungen eines Gegenstandes (1) ermöglichen, wobei eine mittig angebrachte Federeinrichtung (8) zwischen der horizontalen Unterseite des durch den oberen Satz von Führungsvorrichtungen (2) abgestützten Gegenstandes (1) und einem Unterbau wirksam ist, wobei die Federeinrichtung (8) eine ständige Richtungskraft in Richtung auf die mittige Position des Gegenstandes (1), in der er (1) eine hauptsächlich vertikale Position einnimmt, zu liefern vermag, dadurch gekennzeichnet, daß die Federeinrichtung aus einer an sich bekannten Zugfeder (8) besteht, die zwischen Gegenstand und Unterbau über den unteren Satz von durch den Unterbau abgestützen Fürungsvorrichtungen (4) wirkt und die unter den Bedingungen der Bewegung auf den linearen Führungsvorrichtungen (2, 4) für eine notwendige langhubige und fortschreitende Federwirkung des Systems sorgt.

2. System nach Anspruch 1, das dafür vorgesehen ist, auch Bewegungen mit einem weiteren Freiheitsgrad, nämlich in vertikaler Richtung (z), aufzunehmen, dadurch gekennzeichnet, daß der untere Satz von Führungsvorrichtungen (4) seinerseits durch einen dritten Satz von Führungsvorrichtungen (12) in hauptsächlich vertikaler Richtung (z) frei beweglich unter der ständigen Wirkung einer Druckfedervorrichtung (15) abgestützt ist, die an einem Ende an der Mitte (9) des zweiten Satzes von Führungsvorrichtungen (4) und am anderen Ende am Unterbau (6) vertikal unterhalb des ersten Endes angebracht ist.

## Revendications

1. Un système à ressort pour la suspension élastique d'un objet soumis à des forces perturbatrices de faibles fréquences, tel que des sièges de véhicule et en particulier des sièges de conducteur dans les véhicules ferroviaires, et pour l'adaptation à des mouvements de grande course, avec au moins trois degrés de liberté entre ledit objet et une base le supportant, deux ensembles de moyens de guidage (2, 4) étant agencés verticalement l'un au-dessus de l'autre et étant montés de manière librement mobile essentiellement horizontalement dans deux directions (x, y) à angle droit les uns par rapport aux autres pour permettre le mouvement d'un objet (1), un moyen à ressort (8) étant monté centralement pour agir entre la face inférieure horizontale de l'objet (1), supporté par l'ensemble supérieur de moyens de guidage (2), et une base, ledit moyen à ressort (8) étant agencé pour fournir en permanence une force directionnelle vers la position centrée de l'objet (1) pour laquelle il occupe une position essentiellement verticale, **caractérisé** en ce que ledit moyen à ressort est constitué par un ressort de traction (8), connu en soi, qui agit entre l'objet et la base par l'intermédiaire de l'ensemble inférieur de moyens de guidage (4) supporté par la base et qui, dans les conditions de déplacement sur les moyens de guidage linéaire (2, 4), fournit une action élastique de grande course et progressive du système.

2. Un système selon la revendication 1, et destiné à s'adapter également à des mouvements ayant un degré de liberté additionnel, à savoir dans la direction verticale (z), **caractérisé** en ce que l'ensemble inférieur de moyens de guidage (4), à son tour, est supporté de manière librement mobile dans une direction essentiellement verticale (z) sous l'action permanente d'un moyen à ressort à pression (15), au moyen d'un troisième ensemble de moyens de guidage (11), ledit moyen à ressort à pression (15) étant assujetti à une extrémité au centre (9) du second ensemble de moyens de guidage (4), son autre extrémité étant assujettie à la base (6) verticalement au-dessous de la première extrémité.
